# EUROPÄISCHE PATENTANMELDUNG

(11) **EP 3 456 563 A1**
(43) Veröffentlichungstag der Anmeldung: **20.03.2019**
(21) Anmeldenummer: 17191377.5
(22) Anmeldetag: 15.09.2017
(51) Int. Cl.: B60H 1/32, F25B 41/04

(54) **TRANSPORTKÄLTEMASCHINE UND VERFAHREN ZU DEREN BETRIEB**

(71) Anmelder: Schmitz Cargobull AG, 48341 Altenberge (DE)
(72) Erfinder: Flacke, Dr., Norbert, 45894 Gelsenkirchen (DE); Debbrecht, Jörg, 49124 Georgsmarienhütte (DE); Schanzmann, Martin, 46395 Bocholt (DE)
(74) Vertreter: Cohausz & Florack

(57) **Zusammenfassung**

Die Erfindung betrifft eine Transportkältemaschine mit einem Verdichter (5), einer Drosseleinrichtung (E) und einem Verdampfer (6), einer Rückführleitung (10), über die das Kältemittel vom Wärmetauscher zum Verdichtereingang (5b) zurückströmt, sowie einem Kurzschlussventil (7a), das zwischen einer Kurzschlussstellung, in der der Verdichtereingang (5b) mit dem Verdichterausgang (5a) kurzgeschlossen ist, und einer Normalstellung hin und her schaltbar ist. Um bei einer solchen Transportkältemaschine bei Einsatz weniger leistungsfähiger Antriebsmotoren für den Verdichter eine in weiten Grenzen frei variierbare Leistungsregelung zu ermöglichen und ein zuverlässiges Anfahren der Maschine zu gewährleisten, schlägt die Erfindung vor, in der Rückströmleitung (10) mindestens ein abhängig vom Kurzschlussventil (7a) gesteuertes Sperrventil (7b) anzuordnen, das zwischen einer Normalstellung, in der es den Durchgang zwischen dem Wärmetauscher (6d) und dem Verdichter (5b) freigibt, und einer Sperrstellung schaltbar ist.

## Beschreibung

Die Erfindung betrifft eine Transportkältemaschine zum Temperieren einer im Laderaum eines Nutzfahrzeugs vorhandenen Atmosphäre.

Transportkältemaschinen der hier in Rede stehenden Art umfassen typischerweise einen Verdichter zum Verdichten eines Kältemittels, wobei der Verdichter einen Verdichtereingang zum Ansaugen des zu verdichtenden Kältemittels in den Verdichter und einen Verdichterausgang aufweist, über den das verdichtete Kältemittel aus dem Verdichter austritt. Der Verdichter ist dabei typischerweise über einen Motor angetrieben, der mit dem Verdichter verkoppelt ist. Die Kopplung kann dabei so ausgebildet sein, dass der Antriebsmotor während des Betriebs konstant mit dem Verdichter verkoppelt ist.

Bei dem Antriebsmotor kann es sich um einen Elektromotor handeln, der über einen von einem in einem optimalen Betriebspunkt laufenden Verbrennungsmotor angetriebenen Generator mit elektrischer Energie versorgt wird.

Bei einem konventionellen Kühlkreislauf strömt das vom Verdichter verdichtete Kältemittel über einen Verflüssiger, auch Kondensator genannt, und eine in Strömungsrichtung hinter dem Verflüssiger angeordnete Drosseleinrichtung, die beispielsweise als Stellventil ausgebildet sein kann, zu einem ebenfalls zu der Transportkältemaschine gehörenden Wärmetauscher. Im Wärmetauscher wird das zuvor verflüssigte Kältemittel expandiert und entzieht dabei einem getrennt von dem Kältemittel durch den Wärmetauscher geleiteten Strom der im Laderaum enthaltenen Atmosphäre Wärme.

Des Weiteren betrifft die Erfindung ein Verfahren zum Betrieb einer Transportkältemaschine der voranstehend genannten Art.

Eine Transportkältemaschine der eingangs angegebenen Art ist aus der DE 10 2010 022 993 A1 bekannt. Diese Transportkältemaschine zum Kühlen des Innenraums eines Kofferaufbaus eines Kühlfahrzeugs weist einen Verbrennungsmotor, einen von dem Verbrennungsmotor angetriebenen elektrischen Generator, einen von dem elektrischen Generator mit elektrischer Antriebsenergie versorgten elektrischen Antriebsmotor, einen Verdichter zum Verdichten eines Kältefluids, eine Kondensatoreinrichtung, eine Drossel und eine von dem Verdichter mit dem Kältefluid versorgte Wärmetauschereinheit auf. Dabei ist das Gehäuse des Antriebsmotors mit dem Gehäuse des Verdichters verbunden. Gleichzeitig ist die Antriebswelle des Verdichters mit der Abtriebswelle des elektrischen Antriebsmotors gekoppelt. Um eine kostengünstige Herstellung und eine hohe Betriebssicherheit bei verbesserter Effizienz zu ermöglichen, ist der Verdichter vom Bautyp "offener Verdichter", bei dem die Austrittsöffnung, aus der seine Antriebswelle austritt, mittels einer gegen die Antriebswelle wirkenden Wellendichtung gegenüber der jeweiligen Umgebung abgedichtet. Dabei ist der Antriebsmotor unabhängig vom Kältefluid gekühlt und seine Abtriebswelle über eine lösbare Kupplung mit der Antriebswelle des Verdichters gekoppelt. Ebenso besitzt der Antriebsmotor ein eigenständiges Gehäuse, das eine Abströmöffnung zum Ablassen von in das Gehäuse des Antriebsmotors eingedrungenem Kältefluid aufweist.

Bei der bekannten Transportkältemaschine erfolgt die Regelung der Kühlleistung über die Regelung der Drehzahl des Verbrennungsmotors und damit einhergehend des elektrischen Antriebsmotors. So kann bei der bekannten Maschine im Fall, dass innerhalb kurzer Zeit hohe Kühlleistungen zur Verfügung gestellt werden sollen, dies dadurch bewerkstelligt werden, dass eine Steuer- und Regeleinrichtung vorgesehen ist, die den Verbrennungsmotor in Abhängigkeit vom Kältebedarf im zu kühlenden Innenraum des Kofferaufbaus steuert. Eine solche Steuer- und Regeleinrichtung versetzt die erfindungsgemäße Kältemaschine in die Lage, auf plötzlich sich ändernden, insbesondere plötzlich steigenden Kältebedarf in dem zu kühlenden Raum schnell zu reagieren. Dies erfolgt dadurch, dass mittels der Steuer- und Regeleinrichtung die Drehzahl des Verbrennungsmotors an den jeweiligen Leistungsbedarf angepasst wird. Einhergehend mit der Drehzahlveränderung des Verbrennungsmotors ändert sich auch die Drehzahl des von ihm angetriebenen Generators mit der Folge, dass auch die vom Generator erzeugte Frequenz und die davon linear abhängige Spannung sich drehzahlabhängig ändern. Dementsprechend erhöht sich auch die Drehzahl des Antriebsmotors und damit die Verdichterleistung.

In der DE 10 2012 024 362 A1 ist ein alternativer Weg der Regelung der Leistung des Verdichters vorgeschlagen worden. Dieser geht ebenfalls aus von einem Verdichter zum Verdichten von Kältemittel mit einem Elektromotor und einer durch den Elektromotor angetriebenen Verdichtungsvorrichtung zum Verdichten von Kältemittel. Bei diesem Verdichter kann es sich um jeden durch einen Regeldruck regelbaren Verdichter, insbesondere einen Axialkolbenverdichter mit stufenloser Hubregelung, wie einen Taumelscheibenverdichter oder Schwenkscheibenverdichter, handeln.

Um bei einer Verdichtereinrichtung der hier in Rede stehenden Art einen größeren Regelungsumfang zu ermöglichen, ist in der DE 10 2014 004 619 A1 ein "digitales" Regelventil und eine an dem Verdichter angeordnete Verbindung vorgesehen, die die Hochdruckseite mit der Niederdruckseite des Verdichters verbindet. Das Regelventil ist dabei in die Verbindung geschaltet, so dass bei geschlossenem Regelventil ("Normalbetrieb") das verdichtete Kältemittel zu den Abnehmern (Wärmetauschern) des angeschlossenen Klimasystems strömt, wogegen bei geöffnetem Regelventil über die Verbindung ein Kurzschluss zwischen der Austritts- und der Ansaugseite des Verdichters hergestellt ist ("Kurzschlussbetrieb"). Die Öffnungsdauer des Ventils kann dabei durch die Regelvorrichtung in einer beliebigen, stufenlosen Taktung erfolgen, so dass eine Förderleistung des Verdichters von prinzipiell 0 % bis 100 % stufenlos bzw. nahezu stufenlos darstellbar ist. Dabei wird ein weiterer Vorteil dieser Regelung darin gesehen, dass das Anlaufmoment des Verdichters nach Stillstand begrenzt werden kann, indem beim Start beispielsweise alle Zylinder abgeschaltet werden. Auf diese Weise kann ein Problem umgangen werden, das beim Betrieb von konventionellen Kältemaschinen der eingangs erläuterten Art besteht. So müssen bei diesen Transportkältemaschinen beim Anfahren des Verdichters hohe Gegenkräfte überwunden werden. Diese rühren bei den konventionellen Maschinen daher, dass der Verdichter vom ersten Moment seiner Betätigung an gegen das im Leitungssystem der Maschine anstehende Kältemittel arbeitet und dabei auch bei niedrigen Drehzahlen, bei denen sein Wirkungsgrad minimal ist, unmittelbar Verdichterarbeit leisten muss. Die zum Anfahren des Verdichters erforderlichen Antriebsmomente sind daher in der Regel deutlich höher als die Antriebskräfte, welche im Normalbetrieb des Verdichters benötigt werden. Infolgedessen müssen die Antriebsmotoren bei konventionellen Transportkältemaschinen so dimensioniert werden, dass sie für den vergleichbar kurzen Zeitraum des Anfahrens der Maschine hohe Leistungen liefern können, die im auf das Anfahren folgenden Dauerbetrieb der Maschinen jedoch nicht mehr abgerufen werden.

Vor dem Hintergrund des voranstehend erläuterten Standes der Technik hat sich die Aufgabe ergeben, eine Transportkältemaschine und ein Verfahren zu deren Betrieb zu nennen, die bei vermindertem Aufwand eine in weiten Grenzen frei variierbare Leistungsregelung ermöglichen und die auch bei Einsatz weniger leistungsfähiger Antriebsmotoren für den Verdichter ein zuverlässiges Anfahren der Maschine erlauben.

Die Erfindung hat diese Aufgabe zum einen durch eine Transportkältemaschine gelöst, die mindestens die in Anspruch 1 angegebenen Merkmale besitzt.

Zum anderen besteht in Bezug auf das Verfahren die erfindungsgemäße Lösung der oben genannten Aufgabe darin, dass eine erfindungsgemäße Vorrichtung in der in Anspruch 6 angegebenen Weise betrieben wird.

Vorteilhafte Ausgestaltungen der Erfindung sind in den abhängigen Ansprüchen angegeben und werden nachfolgend wie der allgemeine Erfindungsgedanke im Einzelnen erläutert.

Eine erfindungsgemäße Transportkältemaschine zum Temperieren einer im Laderaum eines Nutzfahrzeugs vorhandenen Atmosphäre umfasst demnach in Übereinstimmung mit dem eingangs erläuterten Stand der Technik
- einen Verdichter zum Verdichten eines Kältemittels mit einem Verdichtereingang zum Ansaugen des zu verdichtenden Kältemittels in den Verdichter und einem Verdichterausgang, über den das verdichtete Kältemittel aus dem Verdichter austritt,
- einen Verflüssiger,
- eine Drosseleinrichtung und
- einen Wärmetauscher, in dem im Betrieb das verdichtete Kältemittel expandiert und dabei einem durch den Wärmetauscher strömenden Strom der im Laderaum enthaltenen Atmosphäre Wärme entzieht, wobei der Wärmetauscher einen Eingang für das in ihn einströmende Kältemittel und einen Ausgang aufweist, über das den Wärmetauscher verlassende Kältemittel in einer Rückführleitung strömt, die von dem Wärmetauscherausgang zum Verdichtereingang führt,
sowie
- ein Kurzschlussventil, das zwischen einer Kurzschlussstellung, in der der Verdichtereingang mit dem Verdichterausgang kurzgeschlossen ist, so dass das aus dem Verdichterausgang austretende Kältemittel unter Umgehung des Verflüssigers, der Drosseleinrichtung und des Wärmetauschers zum Verdichtereingang strömt, und einer Normalstellung hin und her schaltbar ist, in der der Kurzschluss zwischen dem Verdichtereingang und dem Verdichterausgang aufgehoben ist und der Wärmetauschereingang mit dem Verdichterausgang und der Wärmetauscherausgang mit dem Verdichtereingang verbunden sind, so dass aus dem Verdichterausgang austretendes verdichtetes Kältemittel durch den Verflüssiger und die Drosseleinrichtung zum Wärmetauschereingang strömt und im Wärmetauscher expandiertes Kältemittel vom Wärmetauscherausgang zum Verdichtereingang strömt.

Bei einer erfindungsgemäßen Transportkältemaschine ist nun zusätzlich mindestens ein zwischen dem Wärmetauscherausgang und dem Verdichtereingang geschaltetes, in Abhängigkeit vom Schaltzustand des Kurzschlussventils ebenfalls gesteuertes Sperrventil vorgesehen, das zwischen einer Normalstellung, in der es den Durchgang zwischen dem Wärmetauscherausgang und dem Verdichtereingang freigibt, und einer Sperrstellung hin und her schaltbar ist, in der der freie Strömungsquerschnitt der Rückführleitung gegenüber dem freien Strömungsquerschnitt der Rückführleitung in der Normalstellung des Sperrventils vermindert ist, wobei diese Verminderung die Möglichkeit einer vollständigen Absperrung der Rückführleitung einschließt, so dass in der Sperrstellung ein verminderter bis gar kein Kältemittelstrom aus dem Wärmetauscher zum Verdichtereingang zurückströmt.

Allgemein gesagt, betrifft die Erfindung somit eine Transportkältemaschine mit einem Verdichter, einer Drosseleinrichtung und einem Wärmetauscher, in dem das Kältemittel expandiert und dabei der im Laderaum enthaltenen Atmosphäre Wärme entzieht, einer Rückführleitung, über die das Kältemittel vom Wärmetauschers zum Verdichtereingang zurückströmt, sowie einem Kurzschlussventil, das zwischen einer Kurzschlussstellung, in der der Verdichtereingang mit dem Verdichterausgang kurzgeschlossen ist, und einer Normalstellung hin und her schaltbar ist, in der der Kurzschluss aufgehoben ist und Kältemittel im Kreislauf vom Verdichter über den Wärmetauscher zum Eingang des Verdichters strömt. Um bei einer solchen Transportkältemaschine bei Einsatz weniger leistungsfähiger Antriebsmotoren für den Verdichter eine in weiten Grenzen frei variierbare Leistungsregelung ermöglichen und ein zuverlässiges Anfahren der Maschine zu gewährleisten, schlägt die Erfindung vor, in der Rückströmleitung mindestens ein abhängig vom Kurzschlussventil gesteuertes Sperrventil anzuordnen, das zwischen einer Normalstellung, in der es den Durchgang zwischen dem Wärmetauscher und dem Verdichter freigibt, und einer Sperrstellung schaltbar ist, in der der freie Strömungsquerschnitt der Rückführleitung gegenüber deren freien Strömungsquerschnitt in der Normalstellung des Sperrventils vermindert ist, wobei diese Verminderung die Möglichkeit einer vollständigen Absperrung einschließt, so dass in der Sperrstellung ein verminderter bis gar kein Kältemittelstrom aus dem Wärmetauscher zum Verdichtereingang zurückströmt.

Eine erfindungsgemäße Transportkältemaschine kann also mittels einer durch die Kombination von Kurzschlussventil und Sperrventil gebildete Ventileinrichtung wahlweise in einem so genannten "Kurzschlussbetrieb", bei dem das aus dem Verdichter austretende verdichtete Kühlmedium, ohne den Wärmetauscher zu passieren, direkt wieder zur Eingangsseite des Verdichters geleitet wird, oder in einem "Normalbetrieb" betrieben werden, bei dem das verdichtete Kältemittel in üblicher Weise durch den Verflüssiger und die Drosseleinrichtung geleitet wird und den Wärmetauscher passiert, dort expandiert und dabei der Umgebung und insbesondere dem auf der Sekundärseite durch den Wärmetauscher geleiteten Strom der im Laderaum vorhandenen und zu kühlenden Atmosphäre Wärme entzieht. Im Kurzschlussbetrieb muss der Verdichter nur vergleichbar geringe Arbeit aufbringen, da die Druckdifferenz zwischen dem an seinem Eingang anstehenden und seinem Ausgang abgehenden Kältefluid minimal ist. Im Normalbetrieb dagegen wird vom Verdichter der Volumenstrom an verdichtetem Kältefluid zum Wärmetauscher gefördert, dort expandiert und zum Verdichter zurückgeführt. Die vom Verdichter dabei geleistete Arbeit und damit einhergehend die Kälteleistung der Transportkältemaschine sind direkt abhängig von der Drehzahl des Antriebsmotors.

Dem erfindungsgemäß vorgesehenen Sperrventil und seiner in Abhängigkeit vom Schaltzustand des Kurzschlussventils erfolgenden Betätigung kommen dabei hinsichtlich der Minimierung der für den Betrieb des Verdichters aufzubringenden Antriebsleistung eine besondere Bedeutung zu. So lässt sich das zwischen dem Eingang des Verdichters und dem Ausgang des Wärmetauschers geschaltete Sperrventil bereits zum Sperren des Zuflusses des aus dem Wärmetauscher austretenden Kältemittelstroms zum Verdichter in die Sperrstellung bringen, während sich das Kurzschlussventil noch in seiner Normalstellung befindet. Der währenddessen weiter arbeitende Verdichter zieht daraufhin sämtliche andere Leitungen, die weiterhin offen mit dem Verdichtereingang verbunden sind, leer von dort vorhandenem Kältemittel und fördert dieses zum Wärmetauscher. Die so aus dem Eingangsbereich des Verdichters abgezogene Kältemittelmenge ist gemessen an dem Kältemittelvolumen, dass im zum Wärmetauscher und von diesem weg führenden Leitungssystem vorhanden ist, so gering, dass es dabei trotz des gesperrten Sperrventils nur zu einem geringen Druckanstieg in den betreffenden Leitungen und Aggregaten kommt.

Wesentlich ist aber, dass durch das Leersaugen des eingangsseitig vom Verdichter vorhandenen Leitungssystems in dem Moment, in dem das Kurzschlussventil in seine Kurzschlussstellung geschaltet wird, innerhalb der dann die Eingangs- und Ausgangsseite des Verdichters kurzschließenden Leitungen sowie im Verdichter selbst nur ein gegenüber dem Normalbetrieb deutlich verminderter Druck vorliegt. Mangels eines Mediums, an dem Verdichterarbeit geleistet werden könnte, ist in Folge dessen die Arbeit, die der Verdichter während des Kurzschlussbetriebs leisten muss, auf ein Minimum reduziert.

Bei einer erfindungsgemäßen Transportkältemaschine erfolgt die Betätigung des Sperrventils also in dem Sinne "in Abhängigkeit" von der Betätigung des Kurzschlussventils, als dass immer dann, wenn das Kurzschlussventil betätigt werden soll, voreilend das Sperrventil betätigt wird, um das erfindungsgemäß beabsichtigte Leersaugen des mit der Eingangsseite des Verdichters verbundenen Leitungssystems zu bewirken.

Die Zeitspanne, die bei in Sperrstellung befindlichem Sperrventil für das Absaugen des eingangsseitig am Verdichter anstehenden Kältemittels benötigt wird, ist in der Praxis sehr kurz. So reichen hierzu in der Regel nur einige wenige Saugzyklen des Verdichters aus. Dementsprechend ist auch der Zeitversatz, der erfindungsgemäß zwischen dem Zeitpunkt, an dem das Sperrventil von seiner Normalbetriebsstellung in seine Sperrstellung geschaltet wird, und dem Zeitpunkt, an dem das Kurzschlussventil von seiner Normalbetriebsstellung in seiner Kurzschlussstellung geschaltet wird, so kurz, dass hierdurch die das Hin- und Herschalten zwischen dem Kurzschlussbetrieb und dem Normalbetrieb erfolgende Leistungsregelung der Transortkältemaschine allenfalls unwesentlich beeinträchtigt wird. Dabei stehen heutzutage handelsübliche Ventile und Steuerungen zur Verfügung, mit denen sich die für die praktische Nutzung der Erfindung erforderlichen Umschaltzeiten ohne Weiteres in betriebsgerechter Weise beherrschen lassen.

Als besonders wirksam erweist sich die durch die erfindungsgemäße Gestaltung einer Transportkältemaschine ermöglichte Betriebsweise dann, wenn der Verdichter nach einem Stillstand angefahren werden soll. So kann zum Abstoppen des Verdichters die aus Sperrventil und Kurzschlussventil gebildete Ventileinrichtung in der voranstehend erläuterten Weise in den Kurzschlussbetrieb geschaltet werden. Innerhalb des den Kurzschluss bildenden Leitungssystems und des Verdichters selbst herrscht dann während dessen Stillstand ein geringer Druck. Soll der Verdichter wieder angefahren werden, muss somit praktisch keine Verdichterleistung erbracht werden. Zum Anfahren muss also dann nur im Wesentlichen die vergleichbar geringe innere Reibung des Verdichters durch die Antriebsleistung überwunden werden. Dementsprechend minimiert kann die vom Antrieb des Verdichters zur Verfügung gestellte Antriebsleistung ausgelegt werden. Während des Anfahrens des Verdichters nach einem Stillstand kann die aus Sperrventil und Kurzschlussventil gebildete Ventileinrichtung in der Kurzschlussstellung gehalten werden, bis der Verdichter eine Mindestdrehzahl erreicht hat. Da die vom Verdichter im Kurzschlussbetrieb zu leistende Verdichtungsarbeit minimal ist, sind währenddessen auch die Gegenkräfte minimal, die der Antriebsmotor überwinden muss, um den Verdichter auf seine jeweilige Solldrehzahl zu bringen. Ist eine für den Normalbetrieb ausreichende Drehzahl erreicht, so kann die Ventileinrichtung entsprechend verstellt werden. Anschließend kann erforderlichenfalls die Drehzahl des Antriebsmotors weiter erhöht werden, bis die für den anschließenden Dauerbetrieb vorgesehene Solldrehzahl erreicht ist.

Grundsätzlich wirkt sich die erfindungsgemäße Betriebsweise im Hinblick auf die Optimierung der Energieausbeute und Minimierung des zum Antrieb des Verdichters erforderlichen Antriebsaggregats unabhängig von der Bauart des Verdichters günstig aus. Als besonders wirksam erweist sich die Erfindung dann, wenn es sich bei dem Verdichter um einen konventionellen Kolbenverdichter, insbesondere einen Hubkolbenverdichter, handelt, bei dem die zum Anfahren erforderlichen Antriebskräfte bei konventioneller Betriebsweise bauartbedingt besonders hoch sein müssen.

Den voranstehenden Erläuterungen entsprechend sieht ein erfindungsgemäßes Verfahren zum Betrieb einer erfindungsgemäß ausgebildeten Transportkältemaschine vor, dass das bei einer erfindungsgemäßen Maschine vorhandene gesteuerte Sperrventil und das bei einer erfindungsgemäßen Maschine ebenso vorhandene Kurzschlussventil wechselweise so hin und her geschaltet werden, dass über ein Kurzschlussintervall das Sperrventil in seiner Sperrstellung und das Kurzschlussventil in seiner Kurzschlussstellung und über ein Normalstellungsintervall das Sperrventil und das Kurzschlussventil in ihrer jeweiligen Normalstellung geschaltet sind, wobei das Kurzschlussventil mit einem Zeitversatz nach dem Sperrventil in seine Kurzschlussstellung geschaltet wird.

Im Übrigen entspricht dadurch, dass die aus Sperrventil und Kurzschlussventil gebildete Ventileinrichtung laufend in der voranstehend beschriebenen Weise zwischen Kurzschlussbetrieb und Normalbetrieb hin und her schaltet, der Kältemittelvolumenstrom, der über die Dauer des Betriebs der Transportkältemaschine den Wärmetauscher passiert, der über die Betriebsdauer gemittelten Summe der Volumenstromeinheiten, die jeweils während der Summe der Zeiteinheiten zum Wärmetauscher geströmt ist, in der die Transportkältemaschine im Normalbetrieb geschaltet war.

Durch Variation der Länge der für den Normalbetrieb vorgesehenen Zeitintervalle und damit einhergehend der zwischen diesen Normalbetriebsintervallen jeweils absolvierten Phasen des Kurschlussbetriebs kann somit die über den Wärmetauscher an die im Laderaum des Fahrzeugs vorhandene Atmosphäre abgegebene Kälteleistung unmittelbar an die jeweiligen Erfordernisse angepasst werden. Dabei versteht es sich von selbst, dass in Fällen, in denen temporär eine maximale Kälteleistung erforderlich ist, die Zeiten, in denen der Verdichter im Kurzschluss betrieben wird, auch auf "Null" reduziert werden können.

Für die erfindungsgemäße Steuerung des Sperrventils und des Kurzschlussventils kann eine Steuereinrichtung vorgesehen sein, die mit beiden Ventilen verkoppelt ist und beispielsweise Stellsignale an zum Betätigen der Ventile vorgesehene Stellglieder abgibt.

Die in erfindungsgemäßer Weise erfolgende Umschaltung von Sperrventil und Kurzschlussventil einer erfindungsgemäßen Transportkältemaschine kann dabei in einem regelmäßigen Takt erfolgen. Optimaler Weise wird dazu der Takt, in dem Sperr- und Kurzschlussventil zwischen ihrer jeweiligen Sperr- oder Kurzschluss- sowie Normalstellung verstellt werden, entsprechend einer Sollvorgabe des dem Wärmetauscher zugeführten Volumenstroms an verdichtetem Kältefluid eingestellt.

Dabei besteht, wie voranstehend ebenfalls bereits dargelegt, eine besonders praxisgerechte und hinsichtlich der Effizienz, mit der eine erfindungsgemäße Transportkältemaschine betrieben werden kann, besonders wichtige Option darin, dass der Takt, in dem die aus Sperr- und Kurzschlussventil gebildete Ventileinrichtung in der erfindungsgemäßen Weise zwischen ihrer Kurzschluss- und ihrer Normalstellung verstellt wird, in Abhängigkeit von einer erfassten Steuergröße derart variiert wird, dass die Temperatur im Laderaum einer Sollvorgabe entspricht.

Als Steuergröße kann dabei optional die Temperatur im Laderaum selbst herangezogen werden, die beim Transport von temperaturempfindlicher Ware in einem bestimmten Sollvorgabebereich gehalten werden muss. Genauso kann es sich bei der Steuergröße aber auch um die Außentemperatur, um eine Information über die Wetterlage, um Informationen über den vom Nutzfahrzeug zurückzulegenden Streckenverlauf und die dabei auftretenden Schwankungen der Außentemperatur etc. handeln, wobei es selbstverständlich ebenso möglich ist, mehrere Steuergrößen bei der Ermittlung der Taktzeiten heranzuziehen, die für den Normalbetrieb und den Kurzschlussbetrieb erforderlich sind, um den jeweils richtigen Strom an verdichtetem Kältefluid durch den Wärmetauscher zu leiten.

Ein wesentlicher Vorteil der Erfindung besteht somit darin, dass der Verdichter dauerhaft im hinsichtlich der Energieausbeute optimalen Betriebspunkt betrieben werden kann und dass keine strömungsenergievernichtenden Ventile, regelbare Drosseln und auch keine komplexen Stelleinrichtungen am Verdichter eingesetzt werden müssen, wie sie bei konventionellen Transportkältemaschinen verwendet werden, um den dem Wärmetauscher jeweils zugeleiteten Volumenstrom an verdichtetem Kältefluid und damit die abgegebene Kälteleistung den jeweiligen Erfordernissen entsprechend kontinuierlich zu regeln.

Die erfindungsgemäße Ausgestaltung und Betriebsweise einer Transportkältemaschine erweist sich hier insbesondere dann als vorteilhaft, wenn zur Erzeugung der zum Antrieb des Verdichters benötigten Energie ein konventioneller Verbrennungsmotor vorgesehen ist, der bei einer erfindungsgemäßen Transportkältemaschine stets in einem beispielsweise im Hinblick auf die Energienutzung, das Leistungsvermögen oder den Wirkungsgrad optimierten Betriebspunkt betrieben werden kann. Gemäß einer weiteren besonders vorteilhaften Ausgestaltung der Erfindung wird daher der Verdichter vom ihm zugeordneten Antriebsmotor mit einer konstanten Drehzahl betrieben. Diese entspricht optimalerweise der Drehzahl, bei der der Antriebsmotor die Antriebsleistung oder der Verdichter seine Verdichterleistung mit optimaler Energieausnutzung erbringt.

Dies schließt selbstverständlich nicht aus, dass erforderlichenfalls zusätzlich zu einer erfindungsgemäß über die Variation der für den Kurzschluss- und den Normalbetrieb vorgesehenen Zeitintervalle vorgenommenen Regelung der abgegebenen Kälteleistung auch eine Variation der Drehzahl des Antriebsmotors vorgenommen werden kann. Durch die Kombination dieser beiden Möglichkeiten zur Regelung der abgegebenen Kälteleistung lässt sich ein besonders fein auf die jeweiligen Anforderungen abgestimmter Betrieb der Transportkältemaschine bewerkstelligen.

Die Erfindung lässt sich problemlos auch an konventionellen Transportkältemaschine nachrüsten. Üblicherweise ist an einer konventionellen Transportkältemaschine ein so genanntes Saug-Modulations-Ventil ("SMV") vorgesehen, das in die vom Wärmetauscher zur Eingangsseite des Verdichters führende Rückflussleitung geschaltet ist. Mittels eines solchen Ventils lässt sich der vom Wärmetauscher zum Verdichter zurückströmende Kältemittelstrom stufenweise oder stufenlos zwischen einem "0"-Strom, wie er bei vollständig geschlossenem Ventil und damit einhergehend vollständig gesperrter Rückflussleitung gegeben ist, und einem Maximalstrom regeln, wie er bei vollständig geöffnetem Ventil und damit einhergehend vollständig geöffneter Rückflussleitung gegeben ist. Ein solcherart betreibbares Ventil lässt sich daher als Sperrventil einsetzen und ist gleichzeitig als Regelventil zum Regeln des vom Verdichter angesaugten Kältemittelvolumenstroms ausgebildet, wobei das Sperrventil dementsprechend mindestens zwischen seiner Sperrstellung, bei der kein Kältemittel durchgelassen wird ("0"-Strom), und einer ersten Normalstellung, in der ein Kältemittelvolumenstrom durch das Sperrventil strömt, der kleiner ist als der maximal mögliche Kältemittelvolumenstrom, sowie mindestens einer weiteren Stellung schaltbar ist, in der ein Kältemittelvolumenstrom durch das Sperrventil strömt, der größer ist als der Kältemittelvolumenstrom, der in der ersten Normalstellung durch das Sperrventil strömt. Dabei kann die betreffende weitere Stellung des Ventils selbstverständlich auch die Stellung sein, in der das Sperrventil vollständig geöffnet ist und ein maximaler Kältemittelstrom zum Verdichter zurückströmt.

Genauso kann es optional zur Vermeidung eines zu großen Druckanstiegs im Bereich des Wärmetausches durch bei in Sperrstellung befindlichem Sperrventil und noch in Normalstellung befindlichem Kurzschlussventil in den Wärmetauscher gefördertem Kältemittel zweckmäßig sein, auch bei in Sperrstellung befindlichem Sperrventil zumindest über einen gewissen Zeitraum noch einen Mindestdurchfluss durch die Rückführleitung zuzulassen. So kann das Sperrventil zur Vorbereitung des Kurzschlussbetriebs zunächst in eine Sperrstellung gebracht werden, in der noch ein geringer Rückfluss von Kältemittel zum Eingang des Verdichters möglich ist. Wenn der Eingangsbereich des Verdichters dann weitestgehend freigesaugt ist, kann das Sperrventil, soweit erforderlich, vollständig geschlossen werden, bevor das Kurzschlussventil in seine Kurzschlussstellung gebracht wird.

Grundsätzlich kann die Zeitspanne, die bei erfindungsgemäßer Betriebsweise zwischen dem Schließen des Sperrventils ("Sperrstellung") und dem Umschalten des Kurzschlussventils von seiner Normalstellung in die Kurzschlussstellung vergehen muss, um das angestrebte Leersaugen des eingangsseitig mit dem Verdichter verbundenen Leitungssystems zu erzielen, empirisch, beispielsweise durch Versuche am Prüfstand, ermittelt werden. Eine unmittelbare Bezugnahme auf die tatsächlichen Betriebsbedingungen lässt sich alternativ oder zusätzlich dadurch bewerkstelligen, dass mittels eines geeigneten Sensors der am Verdichtereingang anliegende Druck erfasst wird und die optional zum Steuern der Ventile vorgesehene Steuereinrichtung mindestens das Kurzschlussventil in Abhängigkeit von dem vom Sensor erfassten Druck steuert. In diesem Fall wird also der Zeitversatz, der zwischen dem Zeitpunkt, an dem das Sperrventil in seine Sperrstellung geschaltet wird, und dem Zeitpunkt vergeht, an dem das Kurzschlussventil in seine Kurzschlussstellung geschaltet wird, der Zeitspanne entspricht, welche der Verdichter bei in Sperrstellung befindlichem Sperrventil und in Normalstellung befindlichem Kurzschlussventil benötigt, um am Verdichtereingang noch anstehendes Kältemittel anzusaugen und zum Wärmetauscher zu fördern, bis der am Verdichtereingang anstehende Druck unter einen Sollwert gesunken ist. Dieser Sollwert markiert dabei den Druck in dem eingangsseitig vom Verdichter vorhandenen Leitungssystem, der erreicht ist, so dass dort nur noch eine minimale Menge an Kältemittel vorhanden ist.

Nachfolgend wird die Erfindung anhand einer ein Ausführungsbeispiel darstellenden Zeichnung näher erläutert. Deren Figuren zeigen:
- Fig. 1: Komponenten einer Transportkältemaschine im Normalbetrieb in einer schematischen Darstellung;
- Fig. 2: die Komponenten einer Transportkältemaschine in einem Zwischenstadium zwischen Normal- und Kurzschlussbetrieb in einer schematischen Darstellung;
- Fig. 3: die Komponenten einer Transportkältemaschine im Kurzschlussbetrieb in einer schematischen Darstellung;

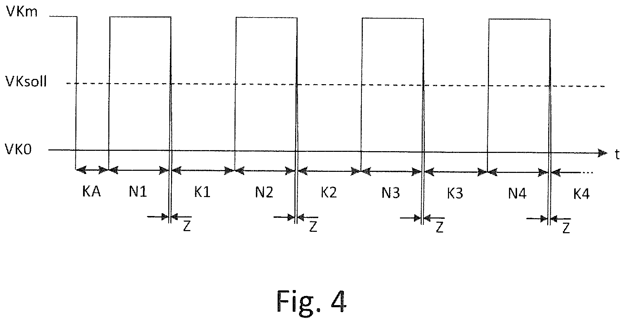

- Fig. 4: ein Diagramm mit den über die Zeit t aufgetragenen Zeitintervallen, in denen sich die in Fig. 1 bis 2 dargestellte Transportkältemaschine im Kurzschluss- und im Normalbetrieb befindet;
- Fig. 5: Komponenten einer weiteren Ausgestaltung der Transportkältemaschine im Normalbetrieb in einer schematischen Darstellung.

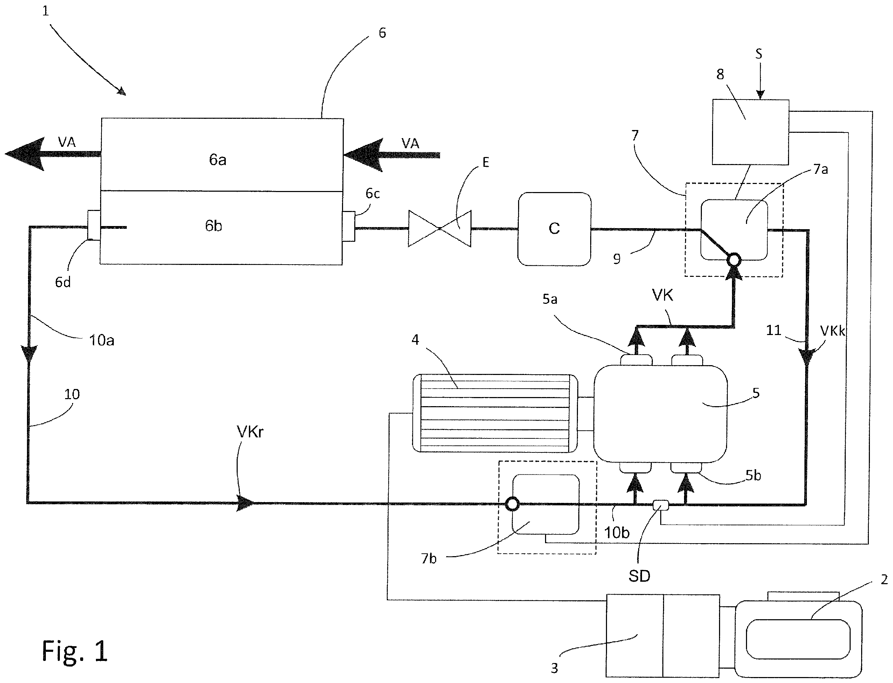

Die in Fig. 1 schematisch dargestellte Transportkältemaschine 1 dient zum Kühlen einer im Laderaum eines hier nicht gezeigten Nutzfahrzeugs vorhandenen Atmosphäre. Typischerweise handelt es sich bei dem Nutzfahrzeug um einen Sattelauflieger für einen Sattelzug, einen Anhänger oder einen Lastkraftwagen mit einem Kofferaufbau, der den Laderaum umgrenzt.

Dabei basiert die Transportkältemaschine 1 auf an sich bekannten, handelsüblichen Transportkältemaschinen, für die ein Beispiel in der oben bereits erwähnten DE 10 2010 022 993 A1 beschrieben ist.

Deshalb werden hier nur die für das Verständnis der Erfindung erforderlichen Bauteile und deren Zusammenwirken sowie die Besonderheiten beschrieben, in denen sich die erfindungsgemäße Transportkältemaschine 1 von den konventionellen Transportkältemaschinen unterscheidet.

So umfasst die Transportkältemaschine 1 einen Verbrennungsmotor 2, einen Generator 3, einen elektrisch betriebenen Antriebsmotor 4, einen Verdichter 5 sowie in Strömungsrichtung des aus dem Verdichter 5 ausgebrachten Kältemittel-Volumenstroms VK aufeinander folgend einen Verflüssiger C, eine Drosseleinrichtung E und einen Wärmetauscher 6. Zusätzlich umfasst die Transportkältemaschine 1 eine Ventileinrichtung 7 und eine Steuereinrichtung 8.

Der Verbrennungsmotor 2, bei dem es sich beispielsweise um einen für diese Zwecke bewährten Dieselmotor handelt, treibt den Generator 3 an, der elektrische Energie zum Antrieb des Antriebsmotors 4 erzeugt.

Die Antriebswelle des Antriebsmotors 4 ist drehfest mit der Antriebswelle des Verdichters 5 verbunden, bei dem es sich um einen konventionellen Kolbenverdichter mit beispielsweise vier Zylindern handelt.

Im Normalbetrieb der Transportkältemaschine 1 kondensiert der aus dem Verdichter 5 austretende, auf einen hohen Druck verdichtete Kältemittel-Volumenstrom VK im Kondensator C. In der anschließend durchlaufenen Drosseleinrichtung E, bei der es sich in konventioneller Weise um ein Expansionsventil handeln kann, wird der verflüssigte Kältemittel-Volumenstrom VK entspannt und gelangt so zum Wärmetauscher 6.

Der ebenfalls konventionell ausgebildete Wärmetauscher 6 hat eine Sekundärseite 6a, durch die im Betrieb der Transportkältemaschine 1 ein aus der im Laderaum enthaltenen Atmosphäre entnommener, zu kühlender Atmosphären-Volumenstrom VA geleitet wird. Die Primärseite 6b des Wärmetauschers 6 wird dagegen im Normalbetrieb (Fig. 1) von dem von der Drosseleinrichtung E kommenden Kältemittel-Volumenstrom VK durchströmt, der über eine Zuströmleitung 9 vom Verdichterausgang 5a über den Verflüssiger C und die Drosseleinrichtung E zum Wärmetauschereingang 6c strömt. Der Kältemittel-Volumenstrom VK tritt über den Wärmetauschereingang 6c in den Wärmetauscher 6 ein, und expandiert dort. Die Expansion entzieht der Umgebung Wärme mit der Folge, dass der durch die Sekundärseite 6a strömende Atmosphären-Volumenstrom VA abgekühlt wird.

Das expandierte Kältemittel tritt aus dem Wärmetauscherausgang 6d aus und strömt als rückströmender Kältemittel-Volumenstrom VKr über eine Rückführleitung 10 zurück zum Verdichter 5.

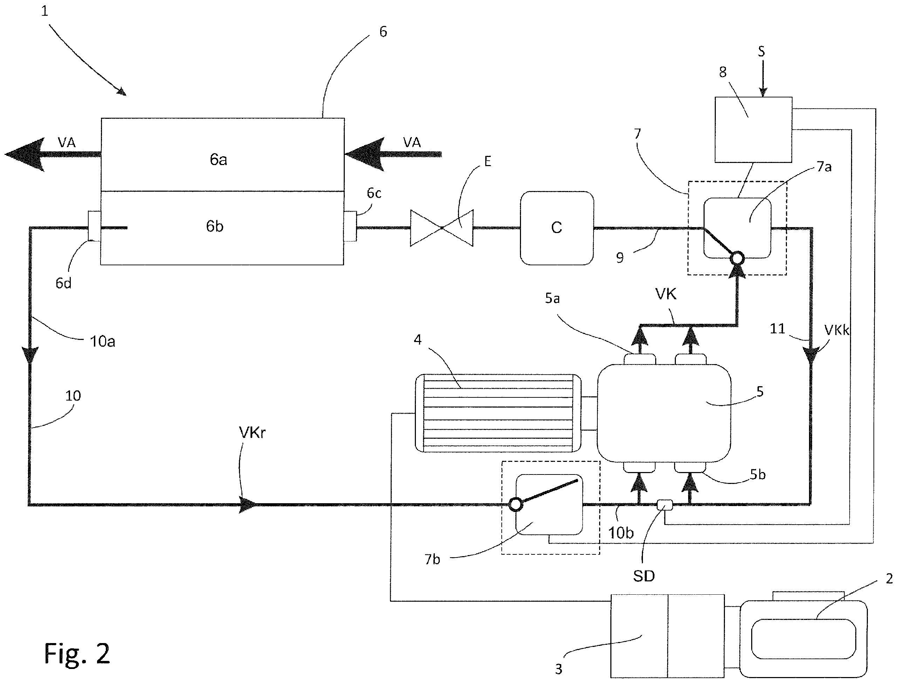

Die Ventileinrichtung 7, in den Figuren 1 und 2 durch gestrichelte Linien angedeutet, umfasst ein Kurzschlussventil 7a sowie ein Sperrventil 7b.

Dabei ist zu beachten, dass die Konfiguration der Ventileinrichtung 7 hier nur beispielhaft gewählt worden ist, um die Funktionsweise einer erfindungsgemäßen Transportkältemaschine zu verdeutlichen. So kann in der Praxis der Kurzschlussbetrieb beispielsweise auch dadurch hergestellt werden, dass der Verdichterein- und -ausgang im Verdichter selbst kurzgeschlossen werden, dass also die zum Schalten zwischen dem Kurzschluss- und Normalbetrieb benötigte Ventileinrichtung in den Verdichter integriert ist.

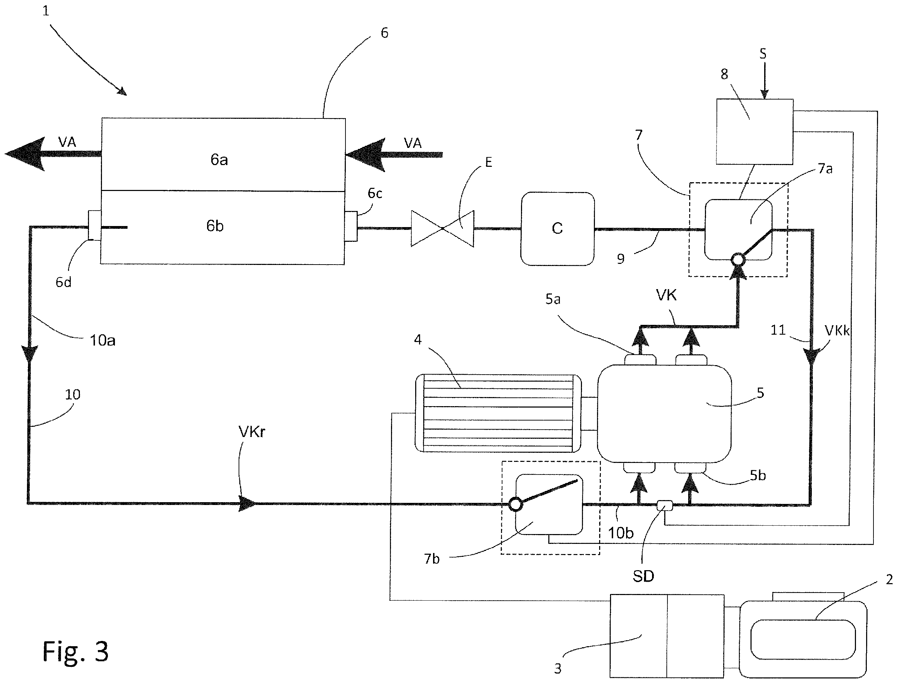

Bei dem hier insoweit nur exemplarisch beschriebenen Beispiel sitzt das Kurzschlussventil 7a in der Zuströmleitung 9 und kann zwischen einer Normalstellung, in der es den aus dem Verdichterausgang 5a austretenden Volumenstrom VK von verdichtetem Kältemittel zum Wärmetauschereingang 6c leitet (Fig. 1), und einer Kurzschlussstellung geschaltet werden, in der es einen Kurzschluss-Kältemittel-Volumenstrom VKk über eine Kurzschlussleitung 11 direkt zurück zum Verdichtereingang 5b leitet, ohne dass der Kurzschluss-Kältemittel-Volumenstrom VKk den Wärmetauscher 6 passiert und ohne dass es zur Expansion des Kurzschluss-Kältemittel-Volumenstroms VKk kommt (Fig. 3).

Das mit dem Kurzschlussventil 7a funktionsverkoppelte Sperrventil 7b sitzt in der Rückführleitung 10 und teilt diese in einen zwischen dem Wärmetauscher 6 und dem Sperrventil 7b vorhandenen Abschnitt 10a und einen zwischen dem Sperrventil 7b und den Verdichtereingängen 5b vorhandenen Abschnitt 10b.

Das Sperrventil 7b kann zwischen einer Normalstellung, in der es den Durchgang zwischen dem Wärmetauscherausgang 6d und dem Verdichtereingang 5b freigibt (Fig. 1), und einer Sperrstellung hin und her geschaltet werden, in der es die Rückführleitung 10 sperrt und so im Kurzschlussbetrieb verhindert, dass über die Kurzschlussleitung 11 vom Wärmetauscher 6 zum Verdichtereingang 5b zurückströmender Kältemittel-Volumenstrom VKr zum Wärmetauscher 6 gelangt (Fig. 3).

Das Kurzschlussventil 7a und das Sperrventil 7b der Ventileinrichtung 7 werden von der Steuereinrichtung 8 gesteuert, welche Steuersignale abgibt, auf die hin die Ventile 7a,7b der Ventileinrichtung 7 wechselweise zwischen ihrer Normalstellung und ihrer Kurzschluss- (Kurzschlussventil 7a) oder Sperrstellung (Sperrventil 7b) umschalten.

Dabei wird im Fall, dass auf Kurzschlussbetrieb umgeschaltet werden soll, zunächst in einem Zwischenstadium zwischen Normal- (Fig. 1) und Kurzschlussbetrieb (Fig. 3) das Sperrventil 7b in seine Sperrstellung geschaltet, in der es die Verbindung zwischen den Abschnitten 10a und 10b der Rückführleitung 10 absperrt, wogegen sich das Kurzschlussventil 7a zu diesem Zeitpunkt noch in seiner Normalstellung befindet. Der Verdichter 5 saugt dementsprechend über seine Verdichtereingänge 5b den in der Kurzschlussleitung 11 und dem Abschnitt 10b der Rückführleitung 10 eingangsseitig vom Verdichter 5 noch vorhandene Kältemittel-Rest an und verdichtet ihn. Der aus dem Verdichterausgang 5a austretende verdichtete Kältemittel-Rest wird über das noch in Normalstellung befindliche Kurzschlussventil 7a und den Kondensor C sowie die Drossel E zum Wärmetauscher 6 gedrückt.

Dieser Zustand wird über eine Zeitspanne Z aufrechterhalten, bis der Druck im aus der Kurzschlussleitung 11 und dem Abschnitt 10b der Rückführleitung 10 gebildete verdichtereingangsseitigen Leitungssystem unter einen Sollwert gesunken ist. Sobald dies erfolgt ist, sendet die Steuereinrichtung 8 ein Steuersignal an das Kurzschlussventil 7a, auf das hin diese in seine Kurzschlussstellung geschaltet wird.

Das Zeitintervall Z, über den sich das Zwischenstadium mit in Sperrstellung befindlichem Sperrventil 7b und in Normalstellung befindlichem Kurzschlussventil 7a erstreckt, dauert nur wenige Hübe des als HubkolbenVerdichter ausgebildeten Verdichters 5. Die konkrete Dauer des Zeitintervalls Z kann empirisch durch Versuche ermittelt werden und als fester Betriebsparameter in der Steuereinrichtung 8 hinterlegt werden.

Alternativ oder ergänzend kann jedoch auch ein Drucksensor SD vorgesehen werden, der den eingangsseitig am Verdichter 5 anstehenden Druck des Kältemittels erfasst und ein dem erfassten Druck entsprechendes Signal an die Steuereinrichtung 8 sendet. Ergibt sich, dass der Druck im Abschnitt 10b der Rückführleitung 10 und in der Kurzschlussleitung 11 unter einen Sollwert gesunken ist, löst die Steuereinrichtung 8 das Umschalten des Kurzschlussventils 7a in seine Kurzschlussstellung aus.

Der nach dem Umschalten des Kurzschlussventils 7a in seine Kurzschlussstellung noch in dem durch die Kurzschlussleitung 11, den Abschnitt 10b der Rückführleitung 10 und dem Leitungsstück zwischen dem Ausgang 5a des Verdichters 5 und dem Kurzschlussventil 7a gebildeten Kurzschlusskreislauf vorhandene und unter einem geringen Druck stehende Kältemittelrest wird vom Verdichter 5 im Kurzschluss gefördert. Wegen des geringen Druckniveaus im Kurzschlusskreislauf ist die dabei zu leistende Verdichterarbeit minimiert.

Im Kühlbetrieb läuft der Verbrennungsmotor 2 mit konstanter Drehzahl in einem hinsichtlich der Energieausnutzung optimalen Betriebspunkt.

Genauso läuft der elektrische Antriebsmotor 4 nach dem Anfahren der Transportkältemaschine 1 mit einer für die Ausnutzung der vom Generator 3 gelieferten elektrischen Energie und die Leistungsausbeute des Verdichters 5 optimalen, vorzugsweise konstanten Drehzahl. In diesem Betriebspunkt stößt der Verdichter 5 einen maximalen Volumenstrom VKm von verdichtetem Kältemittel in die Zuströmleitung 9.

Die Steuereinrichtung 8 erhält als weitere Steuergröße S beispielsweise die mittels eines hier nicht gezeigten Sensors erfasste Temperatur der zu kühlenden Atmosphäre im Laderaum des nicht dargestellten Nutzfahrzeugs. Ausgehend von dieser Steuergröße S ermittelt die Steuereinrichtung 8 den Volumenstrom VKsoll an verdichtetem Kältemittel, der den Wärmetauscher 6 durchströmen muss. Der Volumenstrom VKsoll wird dabei so berechnet, dass im Wärmetauscher 6 eine Kühlleistung an den Atmosphären-Volumenstrom VA abgegeben wird, die ausreicht, um die Steuergröße S in einem durch den Benutzer des Nutzfahrzeugs vorgegebenen Sollbereich zu halten. Diese Ermittlung der Steuereinrichtung 8 kann unterstützt werden durch weitere Steuergrößen, wie die Außentemperatur, die klimatischen Bedingungen etc., die der Steuereinrichtung 8 zugeführt werden.

Ist der erforderliche Volumenstrom VKsoll bekannt, so werden die Dauer der Intervalle K1, K2, ..., Kn, in denen die Ventile 7a,7b der Ventileinrichtung 7 in Kurzschlussstellung betrieben werden, und die Intervalle N1, N2, ..., Nn bestimmt, in denen die Ventile 7a,7b der Ventileinrichtung 7 in Normalstellung gehalten werden. Dabei werden die Dauer der Intervalle K1, K2, ..., Kn und der Intervalle N1, N2, ..., Nn so bestimmt, dass der über eine bestimmte gleiche Anzahl von Kurzschluss-Intervallen K1, K2, ..., Kn, in denen kein Kältemittel ("VKO") zum Wärmetauscher 6, sondern Kältemittel im Kurzschluss direkt vom Verdichterausgang 5a zurück zum Verdichtereingang 5b des Verdichters 5 gefördert wird, und Normalbetrieb-Intervallen N1, N2, ..., Nn, in denen der vom Verdichter 5 laufend gelieferte Volumenstrom VKm zum Wärmetauscher 6 geleitet wird, im zeitlichen Mittel durch den Wärmetauscher 6 geleitete Volumenstrom VK dem Volumenstrom VKsoll entspricht.

Das Umschalten vom Normal- zum Kurzschlussbetrieb erfolgt dabei in der oben beschriebenen Weise mit einem jeweils um das Zeitintervall Z dem Kurzschlussventil 7a voreilenden Sperrventil 7b.

Die voranstehend als automatisierter Vorgang beschriebene Ermittlung der Dauer der Intervalle K1, K2, ..., Kn bzw. N1, N2, ..., Nn, in denen die Ventile 7a,7b der Ventileinrichtung 7 jeweils in Kurzschlussstellung bzw. Normalstellung gehalten werden, kann selbstverständlich auch durch eine manuell vorgenommene Einstellung ersetzt werden, bei der eine bestimmte Kälteleistung oder ein bestimmter Kältemittel-Volumenstrom VKsoll, der den Wärmetauscher 6 durchströmen soll, vorgegeben wird und bei der aus der vorgegebenen Kälteleistung oder dem vorgegebenen Volumenstrom VKsoll dann die Dauer der Kurzschlussbetrieb-Intervalle K1, K2, ..., K und der Normalbetriebsintervalle N1, N2, ..., Nn bestimmt wird.

Soll die Transportkältemaschine 1 stillgesetzt werden, wird wie beim Umschalten vom Normal- in den Kurzschlussbetrieb vorgegangen. Dementsprechend wird zunächst das Sperrventil 7b in seine Sperrstellung geschaltet, während das Kurzschlussventil 7a noch in der Normalstellung verharrt. Der eingangsseitig am Verdichter 5 noch anstehende Kältemittel-Rest wird vom Verdichter 5 über die Dauer des Zeitintervalls Z zum Wärmetauscher 6 gedrückt. Dann wird das Kurzschlussventil 7a in seine Kurzschlussstellung gebracht und die Transportkältemaschine 1 zum Stillstand gebracht. Im Kurzschlusskreislauf herrscht während des Stillstands weiterhin der zuvor hergestellte niedrige Druck.

Nachdem der Verbrennungsmotor 2 zur Wiederinbetriebnahme der Transportkältemaschine 1 gestartet und auf Solldrehzahl gebracht ist, liefert der Generator 3 ausreichend elektrische Energie zum Anfahren des elektrischen Antriebsmotors 4. Haben der Antriebsmotor 4 und damit einhergehend der Verdichter 5 nach einem Intervall KA ihre Solldrehzahl erreicht, setzt der durch das in der voranstehend beschriebenen Weise taktweise Umschalten der aus dem Kurzschlussventil 7a und dem Sperrventil 7b gebildeten Ventileinrichtung 7 zwischen der Normalbetriebsstellung und der Kurzschlussbetriebsstellung gekennzeichnete Betrieb der Transportkältemaschine 1 ein.

Das Sperrventil 7b und das Kurzschlussventil 7a werden dabei solange in ihrer Sperr- bzw. Kurzschlussstellung gehalten, bis die Solldrehzahl des Antriebsmotors 4 und des mit ihm verkoppelten Verdichters 5 erreicht ist. Aufgrund des geringen Drucks im Kurzschlusskreislauf ist die dabei vom Verdichter 5 zu leistende Verdichterarbeit und damit einhergehend die vom Antriebsmotor 4 aufzubringende Antriebsleistung minimal. Dementsprechend benötigt der Antriebsmotor 4 relativ wenig elektrische Energie, um den Verdichter 5 in Bewegung zu bringen, und kann insgesamt kleiner dimensioniert werden als dies bei nicht erfindungsgemäßer, konventioneller Betriebsweise der Fall wäre.

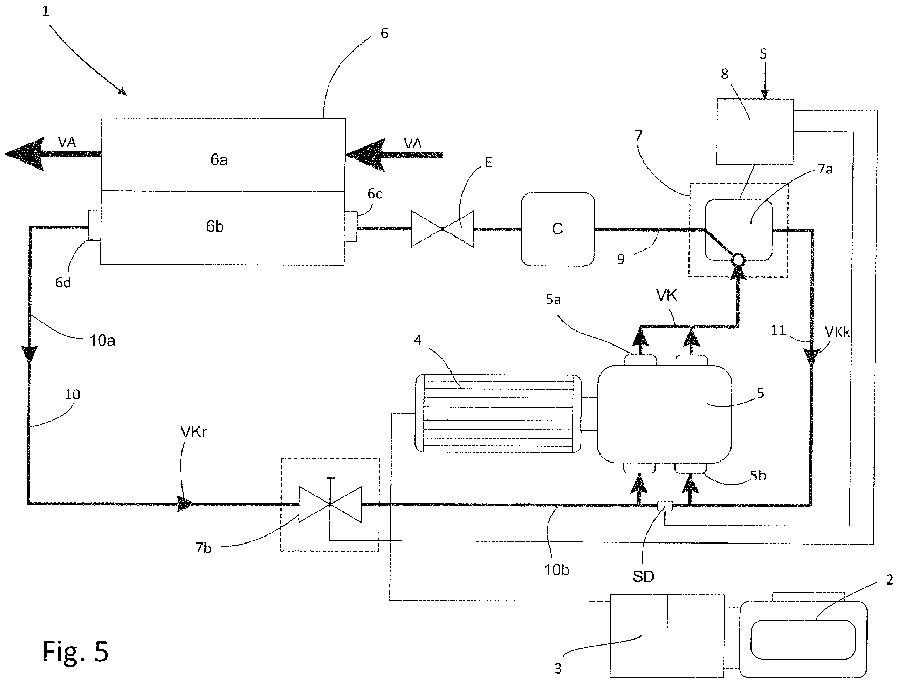

Der einzige Unterschied zwischen der in Fig. 5 dargestellten Ausgestaltung einer Transportkältemaschine 1 und den in der in den Figuren 1 - 3 dargestellten Transportkältemaschine 1 besteht im Sperrventil 7b.

Bei der in den Figuren 1 - 3 dargestellten Transportkältemaschine 1 handelt es sich bei dem Sperrventil 7b um ein einfaches Schaltventil, welches nur zwischen zwei Zuständen (Sperrstellung = gesperrt / Normalstellung = offen) hin und her geschaltet werden kann.

Dagegen ist bei der in Fig. 5 dargestellten Ausgestaltung das Sperrventil 7b als so genanntes Saug-Modulations-Ventil ausgebildet, wie es standardmäßig in vielen bekannten Transportkältemaschinen verbaut ist. Mittels eines solchen Ventils kann der vom Wärmetauscher 6 zum Verdichter 5 zurückströmende Kältemittelvolumenstrom VKr und damit einhergehend insgesamt der vom Verdichter 5 über den Kondensor C, die Drossel E zum Wärmetauscher 6 strömende Kältemittelvolumenstrom VK stufenlos geregelt werden. Auch ein derartiges Ventil kann damit zwischen einer Sperrstellung, in der es vollständig geschlossen ist, in eine Normalstellung hin und her geschaltet werden, in der es der jeweiligen Vorgabe entsprechend weit geöffnet ist, um den jeweiligen Soll-Volumenstrom VKsoll an vom Wärmetauscher 6 zum Verdichter 5 zurückströmendem Kältemittel passieren zu lassen.

### BEZUGSZEICHEN

- 1: Transportkältemaschine
- 2: Verbrennungsmotor
- 3: Generator
- 4: Antriebsmotor
- 5: Verdichter
- 5a: Verdichterausgang
- 5b: Verdichtereingang
- 6: Wärmetauscher
- 6a: Sekundärseite des Wärmetauschers 6
- 6b: Primärseite des Wärmetauschers 6
- 7: Ventileinrichtung
- 7a: Kurzschlussventil
- 7b: Sperrventil
- 8: Steuereinrichtung
- 9: Zuströmleitung
- 6c: Wärmetauschereingang
- 6d: Wärmetauscherausgang
- 10: Rückführleitung
- 10a, 10b: Abschnitte der Rückführleitung 10
- 11: Kurzschlussleitung
- C: Verflüssiger (Kondensator)
- E: Drosseleinrichtung
- K1 ... Kn: Intervalle, in denen die Ventile 7a,7b der Ventileinrichtung 7 in Kurzschlussstellung betrieben werden
- N1 ... Nn: Intervalle, in denen die Ventile 7a,7b der Ventileinrichtung 7 in Normalstellung gehalten werden
- S: Steuergröße
- SD: Drucksensor
- t: Zeit
- VA: zu kühlender Atmosphären-Volumenstrom
- VK: Kältemittel-Volumenstrom
- VKk: im Kurzschlusskreislauf geförderter Kältemittel-Volumenstrom
- VKm: Nenn-Volumenstrom an Kältemittel
- VKsoll: Soll-Volumenstrom an Kältemittel
- VKr: rückströmender Kältemittelstrom
- VKO: Null-Volumenstrom
- KA: Intervall, in dem während des Anfahrens die Ventile 7a,7b der Ventileinrichtung 7 in Kurzschlussstellung gehalten werden
- Z: Zeitversatz zwischen dem Schalten des Sperrventils 7b in seine Sperrstellung und dem Schalten des Kurzschlussventils 7a in seine Kurzschlussstellung

## Patentansprüche

1. Transportkältemaschine zum Temperieren einer im Laderaum eines Nutzfahrzeugs vorhandenen Atmosphäre, wobei die Transportkältemaschine
- einen Verdichter (5) zum Verdichten eines Kältemittels mit einem Verdichtereingang (5b) zum Ansaugen des zu verdichtenden Kältemittels in den Verdichter (5) und einem Verdichterausgang (5a), über den das verdichtete Kältemittel aus dem Verdichter (5) austritt,
- einen Verflüssiger (C),
- eine Drosseleinrichtung (E) und
- einen Wärmetauscher (6), in dem im Betrieb das verdichtete Kältemittel expandiert und dabei einem durch den Wärmetauscher (6) strömenden Strom (VA) der im Laderaum enthaltenen Atmosphäre Wärme entzieht, wobei der Wärmetauscher (6) einen Eingang (6c) für das in ihn einströmende Kältemittel und einen Ausgang (6d) aufweist, über das den Wärmetauscher (6) verlassende Kältemittel in einer Rückführleitung (10) strömt, die von dem Wärmetauscherausgang (6d) zum Verdichtereingang (5b) führt,
sowie
- ein Kurzschlussventil (7a) umfasst, das zwischen
- einer Kurzschlussstellung, in der der Verdichtereingang (5b) mit dem Verdichterausgang (5a) kurzgeschlossen ist, so dass das aus dem Verdichterausgang (5a) austretende Kältemittel unter Umgehung des Verflüssigers (C), der Drosseleinrichtung (E) und des Wärmetauschers (6) zum Verdichtereingang (5b) strömt, und
- einer Normalstellung hin und her schaltbar ist, in der der Kurzschluss zwischen dem Verdichtereingang (5b) und dem Verdichterausgang (5a) aufgehoben ist und der Wärmetauschereingang (6c) mit dem Verdichterausgang (5a) und der Wärmetauscherausgang (6d) mit dem Verdichtereingang (5b) verbunden sind, so dass aus dem Verdichterausgang (5a) austretendes verdichtetes Kältemittel durch den Verflüssiger (C) und die Drosseleinrichtung (E) zum Wärmetauschereingang (6c) strömt und im Wärmetauscher (6) expandiertes Kältemittel vom Wärmetauscherausgang (6d) zum Verdichtereingang (5b) strömt,
**dadurch gekennzeichnet, dass** mindestens ein zwischen dem Wärmetauscherausgang (6d) und dem Verdichtereingang (5b) geschaltetes, in Abhängigkeit vom Schaltzustand des Kurzschlussventils (7a) ebenfalls gesteuertes Sperrventil (7b) vorgesehen ist, das zwischen einer Normalstellung, in der es den Durchgang zwischen dem Wärmetauscherausgang (6d) und dem Verdichtereingang (5b) freigibt, und einer Sperrstellung hin und her schaltbar ist, in der der freie Strömungsquerschnitt der Rückführleitung (10) gegenüber dem freien Strömungsquerschnitt der Rückführleitung (10) in der Normalstellung des Sperrventils (7b) einschließlich der Möglichkeit einer vollständigen Absperrung der Rückführleitung (10) vermindert ist, so dass in der Sperrstellung ein verminderter bis gar kein Kältemittelstrom aus dem Wärmetauscher (6) zum Verdichtereingang (5b) zurückströmt.

2. Transportkältemaschine nach Anspruch 1, **dadurch gekennzeichnet, dass** dasSperrventil(7b)inseiner Sperrstellung die Rückführleitung (10) vollständig verschließt.

3. Transportkältemaschine nach Anspruch 1 oder 2, **dadurch gekennzeichnet, dass** das Sperrventil (7b) als Regelventil zum Regeln des vom Verdichter (5) angesaugten Kältemittelvolumenstroms ausgebildet ist, wobei das Sperrventil (7b) zwischen seiner Sperrstellung und einer ersten Normalstellung, in der ein Kältemittelvolumenstrom durch das Sperrventil (7b) strömt, der kleiner ist als der maximal mögliche Kältemittelvolumenstrom, sowie mindestens einer weiteren Stellung verstellbar ist, in der ein Kältemittelvolumenstrom durch das Sperrventil (7b) strömt, der größer ist als der Kältemittelvolumenstrom, der in der ersten Normalstellung durch das Sperrventil (7b) strömt.

4. Transportkältemaschine nach einem der voranstehenden Ansprüche, **dadurch gekennzeichnet, dass** sie eine Steuereinrichtung (8) umfasst, die das Sperrventil (7b) und das Kurzschlussventil (7a) steuert.

5. Transportkältemaschine nach Anspruch 4, **dadurch gekennzeichnet, dass** ein Sensor (SD) vorgesehen ist, der den am Verdichtereingang (5b) anliegenden Druck erfasst und **dass** die Steuereinrichtung (8) mindestens das Kurzschlussventil (7a) in Abhängigkeit von dem von dem Sensor (SD) erfassten Druck steuert.

6. Verfahren zum Betrieb einer gemäß einem der voranstehenden Ansprüche ausgebildeten Transportkältemaschine, **dadurch gekennzeichnet, dass** dasSperrventil(7b)unddas Kurzschlussventil (7a) wechselweise so hin und her geschaltet werden, dass über ein Kurzschlussintervall das Sperrventil (7b) in seiner Sperrstellung und das Kurzschlussventil (7a) in seiner Kurzschlussstellung und über ein Normalstellungsintervall das Sperrventil (7b) und das Kurzschlussventil (7a) in ihrer jeweiligen Normalstellung geschaltet sind, wobei das Kurzschlussventil (7a) mit einem Zeitversatz nach dem Sperrventil (7b) in seine Kurzschlussstellung geschaltet wird.

7. Verfahren nach Anspruch 6, **dadurch gekennzeichnet, dass** das Sperrventil (7b) und die Ventileinrichtung (7) taktweise hin und her geschaltet werden.

8. Verfahren nach Anspruch 7, **dadurch gekennzeichnet, dass** der Takt, in dem das Sperrventil (7b) und das Kurzschlussventil (7a) hin und her verstellt werden, entsprechend einer Sollvorgabe (VKSoII) des dem Wärmetauscher (6) zugeführten Volumenstroms (VK) an verdichtetem Kältefluid eingestellt wird.

9. Verfahren nach Anspruch 7, **dadurch gekennzeichnet, dass** der Takt, in dem das Sperrventil (7b) und das Kurzschlussventil (7a) hin und her geschaltet werden, in Abhängigkeit von einer erfassten Steuergröße (S) derart variiert wird, dass die Steuergröße (S) einer Sollvorgabe entspricht.

10. Verfahren nach Anspruch 9, **dadurch gekennzeichnet, dass** die Steuergröße (S) die Temperatur im Laderaum des Nutzfahrzeugs ist.

11. Verfahren nach einem der Ansprüche 6 - 10, **dadurch gekennzeichnet, dass** während des Anfahrens des Verdichters (5) nach einem Stillstand das Sperrventil (7b) in seiner Sperrstellung und das Kurzschlussventil (7a) in seiner Kurzschlussstellung gehalten werden, bis der Verdichter (5) eine Mindestdrehzahl erreicht hat.

12. Verfahren nach einem der Ansprüche 6 - 11, **dadurch gekennzeichnet, dass ein** Antriebsmotor (4) zum Antrieb des Verdichters (5) vorgesehen ist.

13. Verfahren nach Anspruch 12, **dadurch gekennzeichnet, dass** der Antriebsmotor (4) den Verdichter (5) mit einer konstanten Drehzahl antreibt.

14. Verfahren nach einem der Ansprüche 6 - 13, **dadurch gekennzeichnet, dass** der Zeitversatz, der zwischen dem Zeitpunkt, an dem das Sperrventil (7b) in seine Sperrstellung geschaltet wird, und dem Zeitpunkt vergeht, an dem das Kurzschlussventil (7a) in seine Kurzschlussstellung geschaltet wird, der Zeitspanne entspricht, welche der Verdichter (5) bei in Sperrstellung befindlichem Sperrventil (7b) und in Normalstellung befindlichem Kurzschlussventil (7a) benötigt, um am Verdichtereingang (5b) noch anstehendes Kältemittel anzusaugen und zum Wärmetauscher (6) zu fördern, bis der am Verdichtereingang (5b) anstehende Druck unter einen Sollwert gesunken ist.

15. Verfahrennach Anspruch 14, **dadurch gekennzeichnet, dass** die Transportkältemaschine gemäß Anspruch 4 ausgebildet ist und das Kurzschlussventil (7a) in seine Kurzschlussstellung geschaltet wird, wenn der vom Drucksensor (SD) erfasste Druck unterhalb eines Sollwerts sinkt.
